# EUROPÄISCHE PATENTSCHRIFT

(11) **EP 2 762 034 B1**
(45) Veröffentlichungstag und Bekanntmachung des Hinweises auf die Patenterteilung: **26.10.2016**
(21) Anmeldenummer: 13005460.4
(22) Anmeldetag: 20.11.2013
(51) Int. Cl.: B65G 51/02, B65G 47/14, A46D 3/04, A46D 3/08

(54) **Puffer für Bürsten**
Buffer for brushes
Tampon pour brosses

(30) Priorität: 31.01.2013 DE 102013001643
(43) Veröffentlichungstag der Anmeldung: 06.08.2014
(73) Patentinhaber: Zahoransky AG, 79674 Todtnau (DE)
(72) Erfinder: Steinebrunner, Peter, 79677 Wembach (DE); Wunderle, Markus, 79677 Aitern (DE); Iwertowski, Christoph, 79674 Todtnau (DE); Seger, Manuel, 79677 Tunau (DE); Großmann, Mathias, 79674 Todtnau (DE)
(74) Vertreter: Börjes-Pestalozza, Henrich

(56) Entgegenhaltungen:
- GB-A- 1 080 345
- GB-A- 2 335 640
- US-A1- 2004 084 280

## Beschreibung

Die Erfindung bezieht sich auf einen Puffer für Bürsten, insbesondere eingedrehte Bürsten, mit einem mehrere Bürstenaufnahmen aufweisenden Puffermagazin.

Solche Puffer sind bekannt siehe zum Beispiel GB 2 335 640, und dienen dazu, mehrere Bearbeitungsvorrichtungen voneinander zu entkoppeln. Beispielsweise kann ein solcher Puffer zwischen einer Vorrichtung zum Spritzen eines Bürstenkörpers und einer Bohrvorrichtung angeordnet sein. Bei Ausfall einer der Vorrichtungen kann die andere Vorrichtung trotzdem weiterarbeiten, da Bürsten aus der Spritz-Vorrichtung in den Puffer abgelegt beziehungsweise von der Bohrvorrichtung aus diesem Entnommen werden können. Auch können unterschiedliche Arbeitsgeschwindigkeiten der Vorrichtungen ausgeglichen werden, und es kann eine gleichbleibende Zuführung von Bürsten an die dem Puffer nachgeordnete Vorrichtung erfolgen.

Solche Puffer weisen üblicherweise ein Transportband oder eine umlaufende Kette mit Bürstenaufnahmen auf, so dass der Puffer vergleichsweise viel Platz beansprucht.
Auch sind vorbekannte Bürstenaufnahmen oft nur bedingt geeignet zur Aufnahme und zum einfachen Entnehmen von eingedrehten Bürsten wie Interdental- oder Mascarabürsten.

Es besteht daher die Aufgabe, einen Puffer der eingangs genannten Art zu schaffen, der einen geringen Platzbedarf hat und zur Aufnahme und einfachen Entnahme von eingedrehten Bürsten geeignet ist.

Die erfindungsgemäße Lösung dieser Aufgabe besteht darin, dass das Puffermagazin ein drehbar gelagertes Pufferrad mit mehreren kreisförmig nebeneinander an dem Pufferrad angeordneten, hohlzylinderartigen Bürstenaufnahmen aufweist, dass ein jeweils vor einem längsseitigen Ende einer der Bürstenaufnahmen positionierbarer Zuführkanal vorgesehen ist, dass eine Entnahmestelle mit zumindest einem an einem längsseitigen Ende einer Bürstenaufnahme anordenbaren Abführkanal vorgesehen ist, wobei das Pufferrad und der zumindest eine Abführkanal relativ zueinander positionierbar sind, und dass an dem zumindest einen Abführkanal eine Saugdüse zur Erzeugung eines Luftstroms und zum Transportieren der Bürste aus der Bürstenaufnahme vorgesehen ist.

Durch die Anordnung der Bürstenaufnahmen an einem drehbar gelagerten Pufferrad kann das Puffermagazin vergleichsweise kompakt ausgebildet werden, so dass der Puffer ein günstiges Verhältnis zwischen Platzbedarf und.Pufferkapazität aufweisen kann.
Das Zu- beziehungsweise Abführen der Bürsten über Zu- oder Abführkanäle sowie das Aufbewahren der Bürsten in hohlzylinderartigen Bürstenaufnahmen ermöglicht eine gute Handhabung von eingedrehten Bürsten wie Interdental- oder Mascarabürsten. Auch das Entfernen der Bürsten aus einer Bürstenaufnahme mittels eines Luftstromes ist gut geeignet, um gedrehte Bürsten zu bearbeiten, da ein Aufnehmen mit Greifern bei solchen Bürsten oft nur schwer möglich ist.

Der Zuführkanal wird vor einer freien Bürstenaufnahme positioniert und eine Bürste in diese Bürstenaufnahme eingeführt. Anschließend wird der Zuführkanal zur nächsten freien Bürstenaufnahme bewegt.
Zum Entnehmen einer Bürste aus einer Bürstenaufnahme wird das Pufferrad gedreht, um eine mit einer Bürste bestückte Bürstenaufnahme an die Entnahmestelle zu bewegen. An der Entriahmestelle ist zumindest ein sich an ein längsseitiges, offenes Ende der jeweiligen Bürstenaufnahme anschließender Abführkanal vorgesehen, über den die zu entnehmende Bürste an eine nachgeordnete Bearbeitungsvorrichtung transportiert wird. Das Entnehmen der Bürste aus der Bürstenaufnahme und der Transport der Bürste durch den Abführkanal erfolgt dabei über eine Saugdüse, die einen Luftstrom erzeugt, welcher die Bürste an das der Bürstenaufnahme abgewandte Ende des Abführkanals befördert. Dadurch ist ein mechanisches Greifen der Bürste zum Entnehmen aus der Bürstenaufnahme nicht erforderlich.
Es ist auch möglich, an der Entnahmestelle zwei Abführkanäle vorzusehen, die an beiden längsseitigen Enden der jeweiligen, an der Entnahmestelle positionierten Bürstenaufnahme angeordnet sind. Dabei kann die Bürste in die eine oder die andere Richtung aus der Bürstenaufnahme entnommen werden, beispielsweise um Bürsten an unterschiedliche Nachbearbeitungsvorrichtungen zu verteilen oder die Bürsten abhängig von ihrer Ausrichtung in der Bürstenaufnahme zu entnehmen und dem einen oder dem anderen Abführkanal zuzuführen. Die beiden Abführkanäle können dann über eine Weiche oder ein Y-förmiges Verbindungsstück in einen gemeinsamen Abführkanal zusammengeführt werden.

Die Abführkanäle und der Zuführkanal können insbesondere flexible Schläuche sein. Dies ermöglicht ein einfaches Montieren und insbesondere Positionieren in der jeweiligen gewünschten Position an einer Bürstenaufnahme.

Es ist zweckmäßig, wenn die Entnahmestelle mit dem zumindest einen Abführkanal ortsfest angeordnet ist, und wenn das Pufferrad drehbar gelagert ist. Dies ermöglicht eine einfache Konstruktion und Positionierung mit einem einfachen Antrieb zum Drehen des Pufferrades.
Der Zuführkanal kann dabei so mit dem Pufferrad verbunden sein, dass er sich mit dem Pufferrad mitdreht, andererseits zum Positionieren an einer freien Bürstenaufnahme entgegen der Drehrichtung des Pufferrades positionierbar ist.

Grundsätzlich ist es denkbar, das Puffermagazin mit den Bürstenaufnahmen horizontal anzuordnen.
Um insbesondere das Einsetzen der Bürsten in die Bürstenaufnahmen zu vereinfachen ist eine vertikale Anordnung des Puffermagazins und der Bürstenaufnahmen zweckmäßig.
Insbesondere bei vertikaler Anordnung des Puffermagazins ist es vorteilhaft, um ein ungewolltes Herausfallen von Bürsten aus den Bürstenaufnahmen zu verhindern, wenn eine auf der dem Zuführkanal abgewandten Seite des Pufferrades angeordnete, im Bereich der Entnahmestelle unterbrochene Anschlagplatte für in den Bürstenaufnahmen gehaltene Bürsten vorgesehen ist.
Die Bürsten fallen dann aus dem Zuführkanal in eine Bürstenaufnahme und schlagen an der Anschlagplatte an. Die Anschlagplatte dreht sich dabei nicht mit dem Pufferrad mit, so dass eine Bürste an der Entnahmestelle durch die Unterbrechung der Anschlagplatte entnommen werden kann oder selbsttätig aus der Bürstenaufnahme in den Abführkanal fällt, und an allen anderen Positionen durch die Anschlagplatte in der Bürstenaufnahme gehalten ist.

Sofern die Entnahmestelle nur einen oberhalb der Bürstenaufnahmen angeordneten Abführkanal aufweist und die Entnahme der Bürste aus der Bürstenaufnahme nach oben hin erfolgt, kann die Anschlagplatte auch durchgehend, ohne Unterbrechung ausgebildet sein.

Ist hingegen eine Bürsten-Entnahme nach unten vorgesehen, so kann es zweckmäßig sein, wenn ein zwischen einer im Bereich des jeweiligen, im Bereich des Abführkanals angeordneten Bürstenaufnahme und einer demgegenüber zurückgezogenen, die Bürstenaufnahme freigebenden Entnahmeposition verstellbarer Schieber vorgesehen ist. Somit kann mit dem Schieber verhindert werden, dass eine Bürste aus der Bürstenaufnahme in den darunter angeordneten Abführkanal fällt, sobald die Bürstenaufnahme in den Bereich der Entnahmestelle positioniert wird. Dies kann insbesondere gewünscht sein, wenn eine wahlweise Entnahme der Bürste an einem Ende der Bürstenaufnahme erfolgen soll, also nach unten oder nach oben. Die Bürste wird durch den Schieber zunächst in der Bürstenaufnahme gehalten. Soll die Bürste in den unterhalb der Bürstenaufnahme angeordneten Abführkanal entnommen werden, so wird der Schieber zurückgezogen. Soll die Bürste hingegen in den oberhalb der Bürstenaufnahme angeordneten Abführkanal entnommen werden, so bleibt der Schieber in seiner die Unterbrechung der Anschlagplatte verschließenden Ruheposition und die Bürste kann mittels der dem oberen Abführkanal zugeordneten Saugdüse aus der Bürstenaufnahme entfernt werden.

Die Bürstenaufnahmen können kürzer sein als die in ihnen aufzunehmenden Bürsten. Die Bürsten stehen dann etwas über die Bürstenaufnahme über, so dass leicht zu erkennen ist, ob eine Bürstenaufnahme mit einer Bürste bestückt oder frei ist, und gegebenenfalls in welcher Ausrichtung die Bürste in der Bürstenaufnahme angeordnet ist, also ob beispielsweise das Besatz-Ende oder das Griff-Ende der Bürste über die Bürstenaufnahme übersteht.

Alternativ können die Bürstenaufnahmen auch durchsichtig ausgebildet sein.

Insbesondere bei einem Puffer mit zwei Abführkanälen ist es zweckmäßig, wenn ein Sensor zur Erfassung der jeweiligen, an der Entnahmestelle angeordneten Bürste vorgesehen ist. Mit dem Sensor kann nicht nur das Vorhandensein einer Bürste an der Entnahmestelle kontrolliert werden, sondern auch die Ausrichtung der Bürste in der Bürstenaufnahme erkannt werden. Je nach Ausrichtung kann die Bürste dann in die eine oder die andere Richtung über den entsprechenden Abführkanal aus der Bürstenaufnahme entfernt werden. Münden die beiden Abführkanäle in einen gemeinsamen Abführkanal, so sind in diesem dann die Bürsten stets in gleicher Ausrichtung angeordnet.

Der Sensor kann insbesondere eine Kamera, eine Kamera mit einer Gegenlichteinheit, einen Lichttaster oder Lichtschranken aufweisen oder ein induktiver Sensor sein.

Um mit dem Puffer eine größere Anzahl Bürsten vorhalten zu können, können mehrere Puffermagazine vorgesehen sein.
Es ist auch möglich, eine Sortierung nach Art oder Farbe der Bürsten vorzunehmen und jeweils Bürsten einer Art oder Farbe in eines der Puffermagazine einzuführen, von wo sie sortiert entnommen werden können.

Um die Bürsten aus mehreren Puffermagazinen und/oder eines Puffermagazins mit zwei Abführkanälen gleichmäßig einer gemeinsamen Nachbearbeitungsvorrichtung zuzuführen, ist es zweckmäßig, wenn mehrere Abführkanäle eines oder mehrerer Puffermagazine über zumindest eine Weiche in einen gemeinsamen Abführkanal münden.

Eine Weiche kann im einfachsten Fall durch ein Y-förmiges Schlauchstück mit zwei Zuführwegen, die in einen gemeinsamen Abführweg münden, gebildet sein. Problematisch kann bei solchen Weichen und einem Transport der Bürsten über einen Luftstrom sein, dass der Luftstrom beziehungsweise dessen Transportdruck nach der Weiche aufgrund der offenen Verzweigungsstelle nachlässt und somit insgesamt mit starken Luftströmen gearbeitet werden muss, um einen zuverlässigen Transport der Bürsten sicherzustellen.

Es ist daher zweckmäßig, wenn eine Weiche jeweils zwei an einer Übergabestelle benachbart angeordnete Transportkanäle sowie einen wechselweise an einem längsseitigen Ende eines der Transportkanäle positionierbaren Abführkanal aufweist. Somit steht der abführseitige Abführkanal jeweils nur mit dem jeweiligen Transportkanal, aus dem eine Bürste zugeführt wird, in Verbindung und der jeweils nicht im Einsatz befindliche Transportkanal ist aus dem Strömungsweg abgekoppelt, so dass durch diesen Transportkanal keine Druckverluste des Transport-Luftstroms erfolgen und der Luftstrom insgesamt einen geringeren Transportdruck aufweisen kann.

Ein weiterführender Erfindungsgedanke sieht vor, dass der Puffer eine dem zumindest einen Puffermagazin vorgeordnete Vereinzelungsvorrichtung für in dem (den) Puffermagazin (en) aufzunehmende Bürsten aufweist.
Dabei ist es nicht erforderlich, die Bürsten nach der Herstellung direkt in den Puffer zu. überführen, sondern die Bürsten können nach der Herstellung gesammelt und eingelagert werden, um sie dann zu einem späteren Zeitpunkt weiter zu verarbeiten.

Dabei ist es zweckmäßig, wenn die Vereinzelungsvorrichtung eine drehbar gelagerte Trommel aufweist, die eine Einfüllöffnung für Bürsten, zumindest eine an der Innenwandung der Trommel angeordnete Mitnahmestrebe, sowie eine im Innenhohlraum der Trommel gelagerte Transportvorrichtung zum Transportieren der Bürsten an eine Entnahmestelle aufweist.
Die gesammelten Bürsten können durch die Einfüllöffnung in den Innenraum der Trommel eingefüllt werden. Durch die Drehung der Trommel werden Bürsten von der Mitnahmestrebe vom unteren Bereich der Trommel mitgenommen und auf der Mitnahmestrebe aufliegend nach oben befördert. Dort fallen die Bürsten bei weiterer Drehung der Trommel von der Mitnahmestrebe in die Transportvorrichtung, mit der die Bürsten an ein längsseitiges Ende der Trommel befördert werden. An dieser Entnahmestelle können die Bürsten einzeln entnommen werden.

Die Transportvorrichtung kann insbesondere eine Rütteleinheit zum Transportieren der Bürsten an die Entnahmestelle aufweisen. Dies ermöglicht einen zuverlässigen Transport der Bürsten bei geringem konstruktivem Aufwand, insbesondere bei geneigter Anordnung der Transportvorrichtung hin zur Entnahmestelle.

Alternativ könnte auch ein Transportband vorgesehen sein.

Um eine gute Vereinzelung der Bürsten zu erreichen, ist es zweckmäßig, wenn die Transportvorrichtung ein Aufnahmeelement mit einem V-, W- oder Wellen-förmigen Querschnitt zur Bildung einer, zwei oder mehrerer Aufnahmerinne(n) für Bürsten aufweist. Die Bürsten fallen von der Mitnahmestrebe in eine der Aufnahmerinnen. Durch das Profil einer Aufnahmerinne ist es nicht möglich, dass mehrere Bürsten direkt nebeneinander liegen. Eventuell übereinander liegende Bürsten können durch die Rüttelbewegung wiederum vereinzelt werden.

Es ist vorteilhaft, wenn in dem der Entnahmestelle zugewandten Endbereich der Aufnahmerinne(n) eine Gebläseeinheit mit Auswerferdüsen zum Auswerfen von Bürsten aus der Aufnahmerinne und der Transportvorrichtung vorgesehen ist.
Wenn an der Entnahmestelle doch mehrere Bürsten in einer Aufnahmerinne liegen, so können diese mit einem durch die Auswerferdüsen ausgebrachten Luftstrom aus der Aufnahmerinne zurück in den Innenraum der Trommel befördert werden. So ist sichergestellt, dass an der Entnahmestelle jeweils nur eine einzige Bürste in einer Aufnahmerinne liegt, die sicher entnommen werden kann.

Im Bereich der Auswerferdüse kann vorzugsweise jeweils ein Sensor zur Erfassung des Befüllungszustandes der Aufnahmerinne in diesem Bereich vorgesehen sein. Je nach SensorSignal wird die Gebläseeinheit zum Auswerfen oder Ausblasen der Bürste aus der jeweiligen Aufnahmerinne aktiviert.

Um eventuell übereinander liegende Bürsten in einer Aufnahmerinne voneinander zu trennen, kann in Transportrichtung vor den Auswerferdüsen der zumindest einen Aufnahmerinne eine rotierende Auswerferbürste vorgesehen sein, wobei der Abstand zwischen der Auswerferbürste und dem Boden der Aufnahmerinne größer als die Dicke einer zu bearbeitenden Bürste und kleiner als die doppelte Dicke einer Bürste ist.
Liegt nur eine Bürste in der Aufnahmerinne, so kann diese ungehindert unter der Auswerferbürste durchlaufen. Liegt hingegen eine zweite Bürste auf einer ersten Bürste, so wird diese zweite, obere Bürste von der Auswerferbürste erfasst und durch deren Rotation aus der Aufnahmerinne befördert, so dass nur die untere Bürste die Auswerferbürste passiert und an die Entnahmestelle gelangt.

Um bei einer Transportvorrichtung mit einem mehrere Aufnahmerinnen aufweisenden Aufnahmeelement jeweils eine Bürste aus einer der Aufnahmerinnen entnehmen zu können ist es zweckmäßig, wenn an der Entnahmestelle ein Entnahmeschieber zur wechselweisen Positionierung eines Transportkanals mit einer Saugdüse an jeweils einer der Aufnahmerinnen vorgesehen ist. Der Entnahmeschieber kann an jeweils einer der Aufnahmerinnen positioniert werden, an der jeweils eine Bürste zur Entnahme bereitsteht. Beispielsweise kann der Eritnahmeschieber bei zwei Aufnahmerinnen jeweils zwischen den Aufnahmerinnen verschoben werden, um wechselweise eine Bürste aus den Aufnahmerinnen zu entnehmen.
Es ist auch möglich, eine Zwischenposition für den Entnahmeschieber vorzusehen, bei der der Transportkanal mit der Saugdüse an keiner der Aufnahmerinnen angeordnet ist. Dies ermöglicht eine Bereitschaftsposition, falls zu einem Zeitpunkt an keiner der Aufnahmerinnen eine Bürste zur Entnahme bereitsteht, beispielsweise aufgrund einer Störung. Dabei kann der Entnahmeschieber auch nur zwischen einer Entnahmeposition an einer der Entnahmerinnen und der Zwischenposition verschoben werden.
Auch dieser Transportkanal kann insbesondere ein Transportschlauch sein.

Wenn die Bürsten hinsichtlich ihrer Längsrichtung in einheitlicher Ausrichtung in ein Puffermagazin überführt werden sollen, ist es vorteilhaft, wenn zwischen der Vereinzelungsvorrichtung und dem zumindest einen Puffermagazin eine Sortierweiche zum Ausrichten der Bürsten und/oder zum Verteilen der Bürsten in jeweils ein Puffermagazin vorgesehen ist.

Dazu kann die Sortierweiche zumindest ein drehbar gelagertes Aufnahmerohr für jeweils eine Bürste aufweisen, das zwischen einer in Verlängerung des Transportkanals der Vereinzelungsvorrichtung angeordneten Zuführposition und einer demgegenüber verschwenkten, einem Zuführkanal eines Puffermagazins zugewandten Abführposition positionierbar ist.
Je nach Ausrichtung der in dem Aufnahmerohr befindlichen Bürste kann das Aufnahmerohr in die eine oder die andere Richtung verschwenkt werden und somit die einzelnen Bürsten jeweils in gleicher Ausrichtung dem Zuführkanal eines Puffermagazins zugeführt werden. Bei Verwendung mehrerer Puffermagazine kann auch eine Sortierung nach Art der Bürste vorgenommen werden, indem die Art der Bürste erkannt wird und das Aufnahmerohr entsprechend der Art der jeweiligen Bürste an einem Zuführkanal eines jeweiligen Puffermagazins positioniert wird, um Bürsten gleicher Art in ein Puffermagazin einzubringen und Bürsten anderer Art in andere Puffermagazine. Es kann auch der jeweilige Zuführkanal an dem Aufnahmerohr positioniert werden, anstatt das Aufnahmerohr zu positionieren.

Zur Erfassung der Ausrichtung und/oder der Art der in einem Aufnahmerohr angeordneten Bürste kann insbesondere ein Sensor vorgesehen sein. Dabei kann beispielsweise ein Sensor mit einer Lichtschranke, einer Kamera, oder ein induktiver Sensor vorgesehen sein.

Um die Geschwindigkeit der Sortierweiche zu erhöhen, können zwei in Schwenkrichtung um 90° versetzt zueinander angeordnete Aufnahmerohre vorgesehen sein, die quer zur Schwenkebene hintereinander angeordnet sind, und es kann ein Schieber zum Positionieren des Transportkanals der Vereinzelungsvorrichtung an dem jeweiligen, ihm in Verlängerung zugewandten Aufnahmerohr vorgesehen sein.
Nach dem Ausleiten einer Bürste aus einem Aufnahmerohr ist es dabei nicht erforderlich, das Aufnahmerohr zurückzupositionieren, um eine weitere Bürste in die Sortierweiche einzuführen, sondern unmittelbar nach dem Ausleiten oder sogar während dem Ausleiten kann eine weitere Bürste in das andere Aufnahmerohr eingeführt werden.
Um den seitlichen Versatz der beiden Aufnahmerohre beim Zuführen einer Bürste auszugleichen, ist der zuführseitige Transportkanal über einen Schieber an dem jeweiligen Aufnähmerohr positionierbar.

Anstelle der hintereinander angeordneten Aufnahmerohre können auch zwei sich schneidende, in Schwenkrichtung um 90° versetzt zueinander angeordnete Aufnahmerohre vorgesehen sein. Die zuführseitigen Enden der Aufnahmerohre sind dabei nicht seitlich versetzt zueinander und ein Positionieren des zuführseitigen Transportkanals ist nicht erforderlich.

Wenn die Bürsten aus der Sortierweiche auf mehrere Puffermagazine verteilt werden sollen, ist es zweckmäßig, wenn ein Schieber zum Positionieren jeweils eines Zuführkanals eines Puffermagäzins an jeweils einem Abgabeende eines Aufnahmerohrs vorgesehen ist.

Nachstehend ist der erfindungsgemäße Puffer anhand der Zeichnungen näher erläutert.

Es zeigt, zum Teil schematisiert:
- Fig. 1: einen Puffer mit vier. Puffermagazinen, einer Vereinzelungsvorrichtung und einer Sortierweiche,
- Fig. 2: bis
- Fig. 4: einen Entnahmeschieber in unterschiedlichen Positionen,
- Fig. 5: eine zweistufige Weiche und
- Fig. 6: einen Puffer mit einem einzigen Puffermagazin.

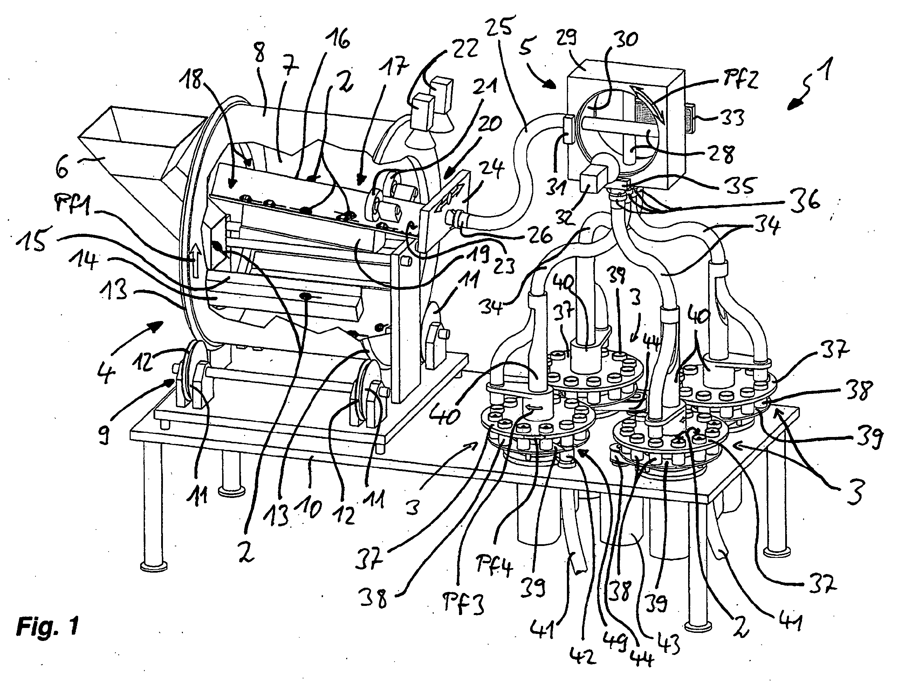

Ein im Ganzen mit 1 bezeichneter Puffer für Bürsten 2 weist gemäß Figur 1 vier Puffermagazine 3 sowie eine Vereinzelungsvorrichtung 4 und eine Sortierweiche 5 auf.

Die zuvor produzierten Bürsten 2, hier eingedrehte Bürsten, beispielsweise Interdental- oder Mascarabürsten, werden über eine trichterartige Einfüllöffnung 6 in den Innenraum 7 einer Trommel 8 der Vereinzelungsvorrichtung 4 eingebracht. Die Trommel 8 ist zur besseren Übersicht teilweise geschnitten dargestellt. Ebenso sind die seitlichen Enden der Trommel 8 zur besseren Ansicht offen dargestellt. Üblicherweise sind die seitlichen Enden geschlossen, beispielsweise mit Blechen abgedeckt, um ein Herausfallen der Bürsten 2 aus dem Innenraum 7 zu verhindern.

Die Trommel 8 kann wie in Figur 1 gezeigt zylindrisch mit rundem Querschnitt ausgebildet sein. Die Trommel kann aber auch aus mehreren Plattensegmenten zusammengesetzt und somit im Querschnitt vieleckig ausgebildet sein.

Die Trommel 8 ist über eine Trommellagerung 9 auf einem Tisch 10 angeordnet. Die Trommellagerung 9 weist dabei Auflage- und Antriebsrollen 11 mit einer Aufnahmenut 12 auf, in die umfangsseitige Lagerprofile 13 an den längsseitigen Enden der Trommel 8 eingreifen. Zumindest eine der Auflage- und Antriebsrollen 11 ist mit einem nicht dargestellten Antrieb verbunden, mit dem die Trommel 8 gemäß Pfeil Pf1 in Rotation versetzt werden kann. Die antreibende Auflage- und Antriebsrolle 11 sowie das entsprechende Lagerprofil 13 können für eine optimierte Kraftübertragung gummiert ausgeführt sein. Um eine besonders stabile Lagerung zu erreichen und um zu verhindern, dass die Trommel 8 auch bei starken Erschütterungen aus der Trommellagerung 9 herausfällt, kann die Trommellagerung 9 auch als Dreipunktlagerung ausgebildet sein.

An der Innenwandung der Trommel 8 sind Mitnahmestreben 14 vorgesehen, mit denen Bürsten 2 im unteren Bereich der Trommel 8 beim Drehen der Trommel 8 mitgenommen und nach oben befördert werden. Die Mitnahmestrebe 14 weist eine Lasche 15 auf, durch die sichergestellt ist, dass auf der Mitnahmestrebe 14 mitgenommene Bürsten 2 bei entsprechender Position der Trommel 8 und der Mitnahmestrebe 14 in ein Aufnahmeelement 16 einer. Transportvorrichtung 17 fällt. Das Aufnahmeelement 16 weist einen W-förmigen Querschnitt und zwei Aufnahmerinnen 18 für die Bürsten 2 auf. Die Transportvorrichtung 17 ist in Längsrichtung schräg angeordnet und mit einer Rütteleinheit 19 werden die Bürsten 2 in den Aufnahmerinnen 18 in Richtung einer Entnahmestelle 20 befördert.

Damit an der Entnahmestelle 20 jeweils nur eine Bürste 2 in einer Aufnahmerinne 18 zur Entnahme bereitsteht, ist an den Aufnahmerinnen 18 vor der Entnahmestelle 20 jeweils eine rotierende Auswerferbürste 21 vorgesehen. Der Abstand der Auswerferbürste 21 zum Boden der Aufnahmerinne 18 ist dabei so bemessen, dass sich eine einzelne Bürste 2 ungehindert unter der Auswerferbürste 21 hindurch bewegen kann. Liegen zwei Bürsten 2 übereinander, so wird die obere Bürste 2 von der Auswerferbürste 21 erfasst und aus der Aufnahmerinne 18 zurück in den Innenraum 7 der Trommel 8 geschleudert.
Die Mitnahmestreben 14 sind so bemessen, dass sie in Längsrichtung der Trommel 8 vor den Auswerferbürsten 21 enden, so dass vermieden ist, dass Bürsten 2 von den Mitnahmestreben 14 in den Bereich hinter den Auswerferbürsten 21 der Aufnahmerinnen 18 fallen können.

Falls doch mehr als eine Bürste 2 innerhalb einer Aufnahmerinne 18 an der Entnahmestelle 20 ankommt, so kann dies von Sensoren 22, beispielsweise Kameras, erkannt werden. Wird das Vorhandensein von mehr als einer Bürste 2 an der Entnahmestelle 20 erkannt, so werden Auswerferdüsen 23 einer nicht näher dargestellten Gebläseeinheit aktiviert und die Bürsten 2 mit einem Luftstrom aus der Aufnahmerinne 18 ausgeworfen.

Sobald eine einzige Bürste 2 an der Entnahmestelle 20 anliegt, können diejenigen Auswerferdüsen 23, die zumindest eine Bürstenlänge von der Entnahmestelle 20 entfernt sind, aktiviert werden, um nachfolgende Bürsten 2 aus der Aufnahmerinne 18 zu entfernen und so zu verhindern, dass sich eine zweite Bürste 2 über die an der Entnahmestelle 20 befindliche Bürste 2 schiebt.

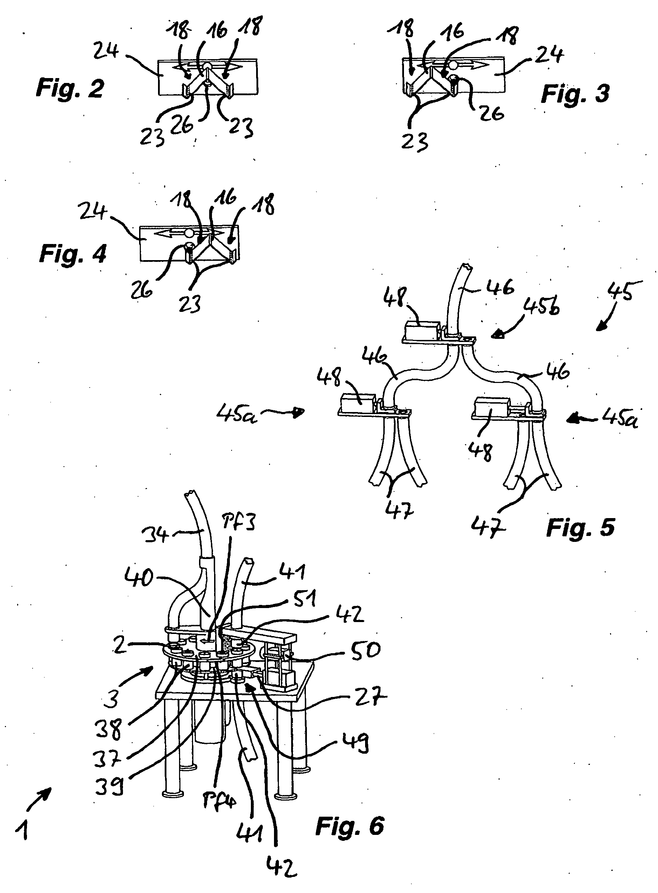

An der Entnahmestelle 20 können die Bürsten 2 wechselweise aus einer der Aufnahmerinnen 18 entnommen werden. Hierzu ist ein Entnahmeschieber 24 vorgesehen, der wechselweise an einer der Aufnahmerinnen 18 positioniert werden kann.
An dem Entnahmeschieber 24 ist ein Transportkanal 25 mit einer Saugdüse 26 angeordnet. Der Entnahmeschieber 24 ist wechselweise an einer der Aufnahmerinnen 18 (Figuren 3 und 4) sowie an einer dazwischen angeordneten Mittelposition (Figur 2) positionierbar. Der Transportkanal 25 ist dabei insbesondere ein flexibler Schlauch.

Wenn an einer der Aufnahmerinnen 18 eine Bürste 2 zur Entnahme bereitsteht, wird der Entnahmeschieber 24 an dieser Aufnahmerinne 18 positioniert und die Bürste 2 wird mittels der Saugdüse 26 aus der Aufnahmerinne 18 in den Transportkanal 25 befördert. Steht an keiner der Aufnahmerinnen 18 eine Bürste 2 zur Entnahme bereit, beispielsweise weil an einer der Aufnahmerinnen 18 eine Störung vorliegt oder gerade zwei Bürsten 2 übereinander liegen, so kann der Entnahmeschieber 24 in die Mittelposition gemäß Figur 2 positioniert werden, bis an einer der Aufnahmerinnen 18 wieder eine Bürste 2 zur Entnahme bereitsteht.
Durch die beiden Aufnahmerinnen 18 ist eine gleichmäßige Bürsten-Entnahme mit hoher Taktfrequenz möglich.

Die aus der Vereinzelungsvorrichtung 4 entnommenen Bürsten 2 werden gemäß Figur 1 über den Transportkanal 25 einer Sortierweiche 5 zugeführt. In dieser Sortierweiche 5 können.die Bürsten 2 ausgerichtet werden, um sie in einheitlicher Ausrichtung in die einzelnen Puffermagazine 3 zu überführen.

Die Sortierweiche 5 weist zwei um 90° versetzt zueinander angeordnete Aufnahmerohre 28 auf, die an einer schwenkbar in einem Gehäuse 29 gelagerten Halterung 30 angeordnet sind. Die Halterung 30 ist gemäß dem Doppelpfeil Pf2 in beide Richtungen verschwenkbar.
Eine Bürste 2 wird durch den von der Saugdüse 26 am Transportkanal 25 verursachten Luftstrom in das jeweils waagrechte Aufnahmerohr 28 eingebracht. Um den Versatz der beiden hintereinander angeordneten Aufnahmerohre 28 auszugleichen, ist der Transportkanal 25 abgabeseitig, im Bereich der Sortierweiche 5, über einen Schieber 31 an dem jeweiligen Aufnahmerohr 28 positionierbar.

Die Aufnahmerohre 28 sind jeweils transparent ausgebildet, so dass mit Hilfe eines Sensors 32, insbesondere einer Kamera, die im Ausführungsbeispiel gemäß Figur 1 mit einer Gegenlichteinheit 33 zusammenwirkt, die Ausrichtung der Bürste 2 erkannt werden kann.
Möglich ist jedoch auch, dass bereits vor dem Entnehmen einer Bürste 2 aus der Trommel 8 die Ausrichtung der Bürste 2 mit einem der Sensoren 22 ermittelt wird. In diesem Fall ist eine Lageerkennung in der Sortierweiche 5 nicht mehr erforderlich und die Aufnahmerohre 28 können auch aus nicht transparentem Material, beispielsweise Metall bestehen.

Über eine nicht dargestellte Steuereinheit kann die Information über die ermittelte Ausrichtung und/oder Art der Bürste 2 weitergegeben werden.

Je nach Ausrichtung der Bürste 2 wird die Halterung 30 in die eine oder die andere Richtung (Pf2) verschwenkt, so dass die Bürsten 2 stets in gleicher Ausrichtung aus der Sortierweiche 5 entnommen werden können. Es kann neben der Ausrichtung auch die Art, beispielsweise die Farbe, der Bürste 2 von dem Sensor 32 erkannt werden. Je nach Art der Bürste 2 kann die Bürste 2 dann einem bestimmten Puffermagazin 3 zugeführt werden. Bei einheitlichen Bürsten 2 können die einzelnen Puffermagazine 3 nacheinander befüllt werden.

Die Puffermagazine 3 weisen jeweils einen Zuführkanal 34 auf. Die Zuführkanäle 34 sind im Bereich der Sortierweiche 5 an einem Schieber 35 befestigt, mit dem jeweils einer der Zuführkanäle 34 wahl- oder wechselweise am abführseitigen Ende eines Aufnahmerohrs 28 positionierbar ist. Den Zuführkanälen 34 ist jeweils eine Saugdüse 36 zugeordnet, mit denen ein Luftstrom zum Transportieren einer Bürste 2 in ein Puffermagazin 3 erzeugt werden kann.
Die Zuführkanäle 34 können ebenfalls insbesondere flexible Schläuche sein.

Die Puffermagazine 3 weisen jeweils ein drehbar gelagertes Pufferrad 37 mit mehreren kreisförmig nebeneinander angeordneten, hohlzylinderartigen Bürstenaufnahmen 38 auf. Damit die Bürsten 2 nicht aus den beidseitig offenen Bürstenaufnahmen 38 herausfallen, ist unterseitig eine ortsfeste Anschlagplatte 39 vorgesehen.

Die Zuführkanäle 34 sind jeweils an einer drehbar gelagerten Halterung 40 gehalten. Nach dem Zuführen einer Bürste 2 an eine Bürstenaufnahme 38 wird die Halterung 40 mit dem Zuführkanal 34 in Richtung des Pfeils Pf3 bis zur nächsten freien Bürstenaufnahme 38 gedreht.

Zum Entnehmen einer Bürste 2 aus einem Puffermagazin 3 wird das jeweilige Pufferrad 37 in Richtung des Pfeils Pf4, also in entgegengesetzter Drehrichtung der Halterung 40, gedreht, bis eine gefüllte Bürstenaufnahme 38 an einer Entnahmestelle 49 über dem Abführkanal 41 des jeweiligen Puffermagazins 3 angeordnet ist. Im Bereich des Abführkanals 41 ist die Anschlagplatte 39 unterbrochen, so dass eine Bürste 2, die in einer in diesen Bereich verschwenkten Bürstenaufnahme 38 angeordnet ist, aus der Bürstenaufnahme 38 in den Abführkanal 41 fällt. An dem Abführkanal 41 ist zudem jeweils eine Saugdüse 42 zur Erzeugung eines Luftstroms vorgesehen, mit dem die Bürste 2 in dem Abführkanal 41 weitertransportiert werden kann.

Zum Antreiben der Pufferräder 37 ist jeweils ein Motor 43 vorgesehen, der das Pufferrad 37 über einen Riemen 44 antreibt.

Die Halterung 40 und das zugehörige Pufferrad 37 sind in derselben Drehachse gelagert und sind derart gekoppelt, dass sich beim Drehen des Pufferrades 37 die Halterung 40 mit dreht. Somit bleibt auch beim Drehen des Pufferrades 37 zum Entnehmen einer Bürste 2 der Zuführkanal 34 über der nächsten freien Bürstenaufnahme 38, so dass das Puffermagazin 3 lückenlos befüllt werden kann, ohne den Zuführkanal 34 mit der Halterung 40 separat nachführen zu müssen. In der Gegenrichtung, zum Anfahren der nächsten freien Bürstenaufnahme 38 in Drehrichtung gemäß Pfeil Pf3, ist die Halterung 40 hingegen unabhängig von dem Pufferrad 37 drehbar, so dass die Bürstenaufnahmen 38 nacheinander befüllt werden können, auch wenn zwischenzeitlich keine Bürste 2 entnommen wird.

Um die Bürsten 2 aus den einzelnen Puffermagazinen 3 des Puffers 1 einer gemeinsamen, nicht dargestellten Nachbearbeitungseinrichtung, beispielsweise einer Verpackungseinrichtung, zuführen zu können, können die Abführkanäle 41 der einzelnen Puffermagazine 3 über eine zweistufige Weiche 45 gemäß Figur 5 in einen gemeinsamen Abführkanal 46 überführt werden. Die vier Abführkanäle 41 der Puffermagazine 3 des Puffers 1 gemäß Figur 1 können in die vier Transportkanäle 47 der beiden unteren Weichen 45a der Weiche 45 gemäß Figur 5 übergehen. Über jeweils einen Schieber 48 wird ein Abführkanal 46 an denjenigen Transportkanal 47 positioniert, von dem eine Bürste 2 einer der Weichen 45a zugeführt wird. Die Abführkanäle 46 der unteren Weichen 45a bilden gleichzeitig die zuführseitigen Transportkanäle 47 der oberen Weiche 45b. Auch diese sind wechselweise über einen Schieber 48 mit einem Abführkanal 46 in Durchgangsverbindung bringbar. Durch geeignete Positionierung der Schieber 48 kann somit jeder der Abführkanäle 41 der Puffermagazine 3 mit dem gemeinsamen Abführkanal 46 der Weiche 45 in Durchgangsverbindung gebracht werden. Da dabei die jeweils nicht benötigten Abführkanäle 46 und Transportkanäle 47 von den benutzten Abführkanälen 46 und Transportkanälen 47 getrennt sind, erfolgt durch diese kein Druckabfall des von der jeweiligen Saugdüse 42 erzeugten Luftstroms.

Figur 6 zeigt eine weitere Ausführungsform eines Puffers 1 mit einem einzigen Puffermagazin 3.
Die Zuführung der Bürsten 2 erfolgt entsprechend den Puffermagazinen 3 aus Figur 1, wobei die Bürsten 2 ohne vorige Anpassung der Ausrichtung in die einzelnen Bürstenaufnahmen 38 an dem Pufferrad 37 eingebracht werden.
Zum Entnehmen einer Bürste 2 aus dem Puffermagazin 3 sind in dieser Ausführung insgesamt zwei Abführkanäle 41 vorgesehen, die jeweils an einem längsseitigen Ende einer jeweiligen, an einer Entnahmestelle 49 angeordneten Bürstenaufnahme 38 angeordnet sind. Die in der an der Entnahmestelle 49 angeordneten Bürstenaufnahme 38 befindliche Bürste 2 kann so entweder nach oben oder nach unten aus der Bürstenaufnahme 38 entnommen werden. Um zu verhindern, dass die Bürste 2 beim Verdrehen des Pufferrades 37 durch die Unterbrechung in der Anschlagplatte 39 direkt nach unten aus der Bürstenaufnahme 38 herausfällt, ist ein Schieber 27 vorgesehen, der zwischen einer im Bereich des unteren Abführkanals 41 angeordneten Position und einer demgegenüber zurückgezogenen Entnahmeposition verstellbar ist.

Mit einem Sensor 50, beispielsweise einer Kamera, dem eine Gegenlichteinheit 51 zugeordnet ist, kann die Ausrichtung der Bürste 2 in der jeweiligen, an der Entnahmestelle 49 angeordneten Bürstenaufnahme 38 ermittelt werden. Die Bürstenaufnahmen 38 sind dazu kürzer als die darin aufzunehmenden Bürsten 2 ausgebildet, so dass die Bürsten 2 über die Bürstenaufnahme 38 überstehen und das überstehende Ende von dem Sensor 50 erfasst werden kann. Alternativ könnten die Bürstenaufnahmen 38 auch transparent ausgebildet sein.

Je nach Ausrichtung der Bürste 2 wird entweder die Saugdüse 42 des oberen Abführkanals 41 aktiviert und die Bürste 2 somit durch den oberen Abführkanal 41 aus der Bürstenaufnahme 38 entfernt, oder der Schieber 48 wird zurückgezogen, so dass die Bürste 2, unterstützt von dem durch die Saugdüse 42 des unteren Abführkanals 41 erzeugten Luftstrom, durch den unteren Abführkanal 41 entfernt wird.

Dadurch sind die aus dem Puffermagazin 3 entnommenen Bürsten 2 stets in gleicher Ausrichtung angeordnet.

Die beiden Abführkanäle 41 können mit einer einstufigen Weiche 45a, ähnlich der Darstellung aus Figur 5, in einen gemeinsamen Abführkanal 46 überführt werden.

Die Zuführkanäle 34, die Transportkanäle 25, 47 und die Abführkanäle 41, 46 sind vorzugsweise Zuführ-, Transport- beziehungsweise Abführschläuche, wodurch diese einfach handzuhaben und zu montieren sind.

Die Saugdüsen 26, 36, 42 sind vorzugsweise zur Erzeugung eines Luftstromes ausgebildet, der mindestens solange aufrecht erhalten wird, bis die jeweilige zu transportierende Bürste 2 an der gewünschten Zielposition angelangt ist. Gegebenenfalls kann der Luftstrom auch noch länger aufrechterhalten werden.

## Patentansprüche

1. Puffer (1) für Bürsten (2), insbesondere eingedrehte Bürsten, mit einem mehrere Bürstenaufnahmen (38) aufweisenden Puffermagazin (3) , **dadurch gekennzeichnet, dass** das Puffermagazin (3) ein drehbar gelagertes Pufferrad (37) mit mehreren kreisförmig nebeneinander an dem Pufferrad (37) angeordneten, hohlzylinderartigen Bürstenaufnahmen (38) aufweist, dass ein jeweils vor einem längsseitigen Ende einer der Bürstenaufnahmen (38) positionierbarer Zuführkanal (34) vorgesehen ist, dass eine Entnahmestelle (49) mit zumindest einem an einem längsseitigen Ende einer Bürstenaufnahme (38) anordenbaren Abführkanal (41) vorgesehen ist, wobei das Pufferrad (37):und der zumindest eine Abführkanal (41) relativ zueinander positionierbar sind, und dass an dem zumindest einen Abführkanal (41) eine Saugdüse (42) zur Erzeugung eines Luftstroms und zum Transportieren der Bürste (2) aus der Bürstenaufnahme (38) vorgesehen ist.

2. Puffer nach Anspruch 1, **dadurch gekennzeichnet, dass** die Entnahmestelle (49) mit dem zumindest einen Abführkanal (41) ortsfest angeordnet ist, und dass das Pufferrad (37) drehbar gelagert ist.

3. Puffer nach Anspruch 1 oder 2, **dadurch gekennzeichnet, dass** eine auf der dem Zuführkanal (34) abgewandten Seite des Pufferrades (37) angeordnete, im Bereich der Entnahmestelle (49) unterbrochene Anschlagplatte (39) für in den Bürstenaufnahmen (38) gehaltene Bürsten (2) vorgesehen ist.

4. Puffer nach einem der Ansprüche 1 bis 3, **dadurch gekennzeichnet, dass** ein zwischen einer im Bereich des jeweiligen, im Bereich des Abführkanals (41) angeordneten Bürstenaufnahme (38) und einer demgegenüber zurückgezogenen, die Bürstenaufnahme (38) freigebenden Entnahmeposition verstellbarer Schieber (27) vorgesehen ist.

5. Puffer nach einem der Ansprüche 1 bis 4, **dadurch gekennzeichnet, dass** die Bürstenaufnahmen (38) kürzer sind als die in ihnen aufzunehmenden Bürsten (2).

6. Puffer nach einem der Ansprüche 1 bis 5, **dadurch gekennzeichnet, dass** ein Sensor (50) zur Erfassung der jeweiligen, an der Entnahmestelle (49) angeordneten Bürste (2) vorgesehen ist.

7. Puffer nach Anspruch 6, **dadurch gekennzeichnet, dass** der Sensor (50) eine Kamera, eine Kamera mit einer Gegenlichteinheit, einen Lichttaster oder Lichtschranken aufweist oder ein induktiver Sensor ist.

8. Puffer nach einem der Ansprüche 1 bis 7, **dadurch gekennzeichnet, dass** mehrere Puffermagazine (3) vorgesehen sind.

9. Puffer nach einem der Ansprüche 1 bis 8, **dadurch gekennzeichnet, dass** mehrere Abführkänäle (41) eines oder mehrerer Puffermagazine (3) über zumindest eine Weiche: (45a, 45b) in einen gemeinsamen Abführkanal (46) münden.

10. Puffer nach einem der Ansprüche 1 bis 9, **dadurch gekennzeichnet, dass** eine Weiche (45a, 45b) jeweils zwei an einer Übergabestelle benachbart angeordnete Transportkanäle (47) sowie einen wechselweise an einem längsseitigen Ende eines der Transportkanäle (47) positionierbaren Abführkanal (46) aufweist.

11. Puffer nach einem der Ansprüche 1 bis 10, **dadurch gekennzeichnet, dass** der Puffer (1) eine dem zumindest einen Puffermagazin (3) vorgeordnete Vereinzelungsvorrichtung (4) für in dem (den) Puffermagazin(en) (3) aufzunehmende Bürsten (2) aufweist.

12. Puffer nach Anspruch 11, **dadurch gekennzeichnet, dass** die Vereinzelungsvorrichtung (4) eine drehbar gelagerte Trommel (8) aufweist, die eine Einfüllöffnung (6) für Bürsten (2), zumindest eine an der Innenwandung der Trommel (8) angeordnete Mitnahmestrebe (14), sowie eine im Innenraum (7) der Trommel (8) gelagerte Transportvorrichtung (17) zum Transportieren der Bürsten (2) an eine Entnahmestelle (20) aufweist.

13. Puffer nach Anspruch 12, **dadurch gekennzeichnet, dass** die Transportvorrichtung (17) eine Rütteleinheit (19) zum Transportieren der Bürsten (2) an die Entnahmestelle (20) aufweist.

14. Puffer nach Anspruch 12 oder 13, **dadurch gekennzeichnet, dass** die Transportvorrichtung (17) ein Aufnahmeelement (16) mit einem V-, W- oder Wellen-förmigen Querschnitt zur Bildung einer, zwei oder mehrerer Aufnahmerinne(n) (18) für Bürsten (2) aufweist.

15. Puffer nach Anspruch 14, **dadurch gekennzeichnet, dass** in dem der Entnahmestelle (20) zugewandten Endbereich der Aufnahmerinne(n) (18) eine Gebläseeinheit mit Aüswerferdüsen (23) zum Auswerfen von Bürsten (2) aus der Aufnahmerinne (18) und der Transportvorrichtung (17) vorgesehen ist.

16. Puffer nach Anspruch 15, **dadurch gekennzeichnet, dass** im Bereich der Auswerferdüse (23) jeweils ein Sensor (22) zur Erfassung des Befüllungszustandes der Aufnahmerinne (18) in diesem Bereich vorgesehen ist.

17. Puffer nach Anspruch 15 oder 16, **dadurch gekennzeichnet, dass** in Transportrichtung vor den Auswerferdüsen (23) der zumindest einen Aufnahmerinne (18) eine rotierende Auswerferbürste (21) vorgesehen ist, wobei der Abstand zwischen der Auswerferbürste (21) und dem Boden der Aufnahmerinne (18) größer als die Dicke einer zu bearbeitenden Bürste (2) und kleiner als die doppelte Dicke einer Bürste (2) ist.

18. Puffer nach einem der Ansprüche 11 bis 17, **dadurch gekennzeichnet, dass** an der Ehtnahmestelle (20) ein Entnahmeschieber (24) zur wechselweisen Positionierung eines Transportkanals (25) mit einer Saugdüse (26) an jeweils einer der Aufnahmerinnen (18) vorgesehen ist.

19. Puffer nach einem der Ansprüche 11 bis 18, **dadurch gekennzeichnet, dass** zwischen der Vereinzelungsvorrichtung (4) und dem zumindest einen Puffermagazine (3) eine Sortierweiche (5) zum Ausrichten der Bürsten (2) und/oder zum Verteilen der Bürsten (2) in jeweils ein Puffermagazin (3) vorgesehen ist.

20. Puffer nach Anspruch 19, **dadurch gekennzeichnet, dass** die Sortierweiche (5) zumindest ein drehbar gelagertes Aufnahmerohr (28) für jeweils eine Bürste (2) aufweist, das zwischen einer in Verlängerung des Transportkanals (25) der Vereinzelungsvorrichtung (4) angeordneten Zuführposition und einer demgegenüber verschwenkten, einem Zuführkanal (34) eines Puffermagazins (3) zugewandten Abführposition positionierbar ist.

21. Puffer nach Anspruch 19 oder 20, **dadurch gekennzeichnet, dass** zwei in Schwenkrichtung um 90° versetzt zueinander angeordnete Aufnahmerohre (28) vorgesehen sind, die quer zur Schwenkebene hintereinander angeordnet sind, und dass ein Schieber (31) zum Positionieren des Transportkanals (25) der Vereinzelungsvorrichtung (4) an dem jewelligen, ihm in Verlängerung zugewandten Aufnahmerohr (28) vorgesehen ist.

22. Puffer nach Anspruch 19 oder 20, **dadurch gekennzeichnet, dass** zwei sich schneidende, in Schwenkrichtung um 90° versetzt zueinander angeordnete Aufnahmerohre (28) vorgesehen sind.

23. Puffer nach einem der Ansprüche 19 bis 22, **dadurch gekennzeichnet, dass** ein Schieber (35) zum Positionieren jeweils eines Zuführkanäls (34) eines Puffermagazins (3) an jeweils einem Abgabeende eines Aufnahmerohrs (28) vorgesehen ist.

24. Puffer nach einem der Ansprüche 19 bis 23, **dadurch gekennzeichnet, dass** ein Sensor (32) zur Erfassung der Ausrichtung und/oder der Art der in einem Aufnahmerohr (28) angeordneten Bürste (2) vorgesehen ist.

25. Puffer nach einem der Ansprüche 1 bis 24, **dadurch gekennzeichnet, dass** der zumindest eine Abführkanal (41), der Zuführkanal (34) und/oder die Transportkanäle (47) und Abführkanäle (46) flexible Schläuche sind.

## Claims

1. Buffer (1) for brushes (2), in particular screwed-in brushes, having a buffer cartridge (3) which comprises a plurality of brush receptacles (38), **characterised in that** the buffer cartridge (3) comprises a rotatably mounted buffer wheel (37) having a plurality of hollow-cylindrical brush receptacles (38) which are arranged in a circular manner next to one another on the buffer wheel (37), **in that** a supply channel (34) is provided which can be positioned in each case in advance of a longitudinal-side end of one of the brush receptacles (38), **in that** a removal point (49) is provided having at least one discharge channel (41) which can be arranged on a longitudinal-side end of a brush receptacle (38), wherein the buffer wheel (37) and the at least one discharge channel (41) can be positioned relative to one another, and **in that** a suction nozzle (42) for generating an air stream and for transporting the brush (2) from the brush receptacle (38) is provided on the at least one discharge channel (41).

2. Buffer as claimed in claim 1, **characterised in that** the removal point (49) having the at least one discharge channel (41) is arranged in a positionally fixed manner, and **in that** the buffer wheel (37) is rotatably mounted.

3. Buffer as claimed in claim 1 or 2, **characterised in that** a stop plate (39), which is arranged on the side of the buffer wheel (37) facing away from the supply channel (34) and is interrupted in the region of the removal point (49) is provided for brushes (2) which are held in the brush receptacles (38).

4. Buffer as claimed in any one of claims 1 to 3, **characterised in that** a slide (27) is provided which can be adjusted between a brush receptacle (38), which is arranged in the region of the respective [*lacuna*] in the region of the discharge channel (41), and a removal position which is retracted with respect thereto and releases the brush receptacle (38).

5. Buffer as claimed in any one of claims 1 to 4, **characterised in that** the brush receptacles (38) are shorter than the brushes (2) to be received therein.

6. Buffer as claimed in any one of claims 1 to 5, **characterised in that** a sensor (50) is provided for detecting the respective brush (2) arranged at the removal point (49).

7. Buffer as claimed in claim 6, **characterised in that** the sensor (50) comprises a camera, a camera with a backlighting unit, a light sensor or light barriers or is an inductive sensor.

8. Buffer as claimed in any one of claims 1 to 7, **characterised in that** a plurality of buffer cartridges (3) are provided.

9. Buffer as claimed in any one of claims 1 to 8, **characterised in that** a plurality of discharge channels (41) of one or a plurality of buffer cartridges (3) issue via at least one switch point (45a, 45b) into a common discharge channel (46).

10. Buffer as claimed in any one of claims 1 to 9, **characterised in that** a switch point (45a, 45b) comprises in each case two transport channels (47), which are arranged adjacently at a transfer point, and a discharge channel (46) which can be positioned alternately on a longitudinal-side end of one of the transport channels (47).

11. Buffer as claimed in any one of claims 1 to 10, **characterised in that** the buffer (1) comprises a separating apparatus (4), which is arranged upstream of the at least one buffer cartridge (3), for brushes (2) to be received in the buffer cartridge(s) (3).

12. Buffer as claimed in claim 11, **characterised in that** the separating apparatus (4) comprises a rotatably mounted drum (8) which comprises a filling opening (6) for brushes (2), at least one entrainment rod (14), which is arranged on the inner wall of the drum (8), and a transport apparatus (17), which is mounted in the inner space (7) of the drum (8), for transporting the brushes (2) to a removal point (20).

13. Buffer as claimed in claim 12, **characterised in that** the transport apparatus (17) comprises a vibration unit (19) for transporting the brushes (2) to the removal point (20).

14. Buffer as claimed in claim 12 or 13, **characterised in that** the transport apparatus (17) comprises a receiving element (16) having a V-, W- or wave-shaped cross-section for forming one, two or a plurality of receiving channels (18) for brushes (2).

15. Buffer as claimed in claim 14, **characterised in that** a blower unit having ejector nozzles (23) for ejecting brushes (2) from the receiving channel (18) and the transport apparatus (17) is provided in the end region of the receiving channel(s) (18) facing the removal point (20).

16. Buffer as claimed in claim 15, **characterised in that** the region of the ejector nozzle (23) is provided with in each case a sensor (22) for detecting the filling state of the receiving channel (18) in this region.

17. Buffer as claimed in claim 15 or 16, **characterised in that** a rotating ejector brush (21) is provided in the transport direction in advance of the ejector nozzles (23) of the at least one receiving channel (18), wherein the spacing between the ejector brush (21) and the base of the receiving channel (18) is greater than the thickness of a brush (2) to be processed and less than twice the thickness of a brush (2).

18. Buffer as claimed in any one of claims 11 to 17, **characterised in that** a removal slide (24) for alternately positioning a transport channel (25) with a suction nozzle (26) at each of the receiving channels (18) is provided at the removal point (20).

19. Buffer as claimed in any one of claims 11 to 18, **characterised in that** a sorting switch (5) for orienting the brushes (2) and/or for distributing the brushes (2) to a respective buffer cartridge (3) is provided between the separating apparatus (4) and the at least one buffer cartridge (3).

20. Buffer as claimed in claim 19, **characterised in that** the sorting switch (5) comprises at least one rotatably mounted receiving pipe (28) for a respective brush (2), which receiving pipe can be positioned between a feed position, which is arranged in the extension of the transport channel (25) of the separating apparatus (4), and a discharge position which is pivoted with respect thereto and faces a feed channel (34) of a buffer cartridge (3).

21. Buffer as claimed in claim 19 or 20, **characterised in that** two receiving pipes (28) which are offset by 90° with respect to one another in the pivoting direction are provided and are arranged one behind the other transversely with respect to the pivoting plane, and **in that** a slide (31) for positioning the transport channel (25) of the separating apparatus (4) is provided on the respective receiving pipe (28) facing said transport apparatus in the extension thereof.

22. Buffer as claimed in claim 19 or 20, **characterised in that** two receiving pipes (28) are provided which intersect and are offset by 90° with respect to one another in the pivoting direction.

23. Buffer as claimed in any one of claims 19 to 22, **characterised in that** a slide (35) is provided for positioning a respective feed channel (34) of a buffer cartridge (3) at a respective output end of a receiving pipe (28).

24. Buffer as claimed in any one of claims 19 to 23, **characterised in that** a sensor (32) is provided for detecting the orientation and/or the type of brush (2) arranged in a receiving pipe (28).

25. Buffer as claimed in any one of claims 1 to 24, **characterised in that** the at least one discharge channel (41), the feed channel (34) and/or the transport channels (47) and discharge channels (46) are flexible tubes.

## Revendications

1. Tampon (1) pour brosses (2), en particulier pour brosses vissées, avec un magasin de tampon (3) présentant plusieurs logements de brosse (38), **caractérisé en ce que** le magasin de tampon (3) présente une roue de tampon (37) montée de façon rotative avec plusieurs logements de brosse cylindriques creux (38) disposés en cercle l'un à côté de l'autre sur la roue de tampon (37), **en ce qu'**il est prévu un canal d'alimentation (34) pouvant être positionné respectivement devant une extrémité longitudinale de l'un des logements de brosse (38), **en ce qu'**il est prévu un point de prélèvement (49) avec au moins un canal d'évacuation (41) pouvant être disposé à une extrémité longitudinale d'un logement de brosse (38), dans lequel la roue de tampon (37) et ledit au moins un canal d'évacuation (41) peuvent être positionnés l'un par rapport à l'autre et **en ce qu'**il est prévu sur ledit au moins un canal d'évacuation (41) une buse aspirante (42) destinée à produire un courant d'air et à transporter la brosse (2) hors du logement de brosse (38).

2. Tampon selon la revendication 1, **caractérisé en ce que** le point de prélèvement (49) avec ledit au moins un canal d'évacuation (41) est disposé de façon stationnaire et **en ce que** la roue de tampon (37) est montée de façon rotative.

3. Tampon selon la revendication 1 ou 2, **caractérisé en ce qu'**il est prévu une plaque de butée (39) disposée sur le côté de la roue de tampon (37) détourné du canal d'alimentation (34) et interrompue dans la région du point de prélèvement (49), pour des brosses (2) maintenues dans les logements de brosse (38).

4. Tampon selon l'une quelconque des revendications 1 à 3, **caractérisé en ce qu'**il est prévu un coulisseau (27) déplaçable entre un logement de brosse respectif (38) disposé dans la région du canal d'évacuation (41) et une position de prélèvement en retrait par rapport à celui-là libérant le logement de brosse (38).

5. Tampon selon l'une quelconque des revendications 1 à 4, **caractérisé en ce que** les logements de brosse (38) sont plus courts que les brosses (2) à y loger.

6. Tampon selon l'une quelconque des revendications 1 à 5, **caractérisé en ce qu'**il est prévu un détecteur (50) destiné à détecter la brosse respective (2) disposée au point de prélèvement (49).

7. Tampon selon la revendication 6, **caractérisé en ce que** le détecteur (50) présente une caméra, une caméra avec une unité de contre-jour, un détecteur à spot mobile ou des barrières lumineuses ou est un détecteur inductif.

8. Tampon selon l'une quelconque des revendications 1 à 7, **caractérisé en ce qu'**il est prévu plusieurs magasins de tampon (3).

9. Tampon selon l'une quelconque des revendications 1 à 8, **caractérisé en ce que** plusieurs canaux d'évacuation (41) d'un ou de plusieurs magasins de tampon (3) débouchent dans un canal d'évacuation commun (46) via au moins un aiguillage (45a, 45b).

10. Tampon selon l'une quelconque des revendications 1 à 9, **caractérisé en ce qu'**une aiguille (45a, 45b) présente respectivement deux canaux de transport (47) disposés à proximité d'un point de transfert ainsi qu'un canal d'évacuation (46) pouvant être positionné en alternance à une extrémité longitudinale de l'un des canaux de transport (47).

11. Tampon selon l'une quelconque des revendications 1 à 10, **caractérisé en ce que** le tampon (1) présente un dispositif de séparation (4) disposé en amont dudit au moins un magasin de tampon (3) pour les brosses (2) à loger dans le(s) magasin(s) de tampon (3).

12. Tampon selon la revendication 11, **caractérisé en ce que** le dispositif de séparation (4) présente un tambour (8) monté de façon rotative qui présente une ouverture de remplissage (6) pour des brosses (2), au moins une pale d'entraînement (14) disposée sur la paroi intérieure du tambour (8), ainsi qu'un dispositif de transport (17) monté dans l'espace intérieur (7) du tambour (8) pour le transport des brosses (2) à un point de prélèvement (20).

13. Tampon selon la revendication 12, **caractérisé en ce que** le dispositif de transport (17) présente une unité à secousses (19) pour le transport des brosses (2) au point de prélèvement (20).

14. Tampon selon la revendication 12 ou 13, **caractérisé en ce que** le dispositif de transport (17) présente un élément de reprise (16) ayant une section transversale en forme de V, de W ou d'ondulations pour la formation d'une, de deux ou de plusieurs rigole(s) de reprise (18) pour des brosses (2).

15. Tampon selon la revendication 14, **caractérisé en ce qu'**il est prévu dans la région d'extrémité de la/des rigole(s) de reprise (18) tournée vers le point de prélèvement (20) une unité de soufflante avec des buses d'éjection (23) pour éjecter des brosses (2) hors de la rigole de reprise (18) et du dispositif de transport (17).

16. Tampon selon la revendication 15, **caractérisé en ce qu'**il est prévu dans la région de la buse d'éjection (23) chaque fois un détecteur (22) pour la détection de l'état de remplissage de la rigole de reprise (18) dans cette région.

17. Tampon selon la revendication 15 ou 16, **caractérisé en ce qu'**il est prévu une brosse d'éjection rotative (21) avant les buses d'éjection (23) de ladite au moins une rigole de reprise (18) dans la direction de transport, dans lequel la distance entre la brosse d'éjection (21) et le fond de la rigole de reprise (18) est plus grande que l'épaisseur d'une brosse à traiter (2) et plus petite que le double de l'épaisseur d'une brosse (2).

18. Tampon selon l'une quelconque des revendications 11 à 17, **caractérisé en ce qu'**il est prévu au point de prélèvement (20) un coulisseau de prélèvement (24) pour le positionnement alternatif d'un canal de transport (25) avec une buse aspirante (26) respectivement à l'une des rigoles de reprise (18).

19. Tampon selon l'une quelconque des revendications 11 à 18, **caractérisé en ce qu'**il est prévu entre le dispositif de séparation (4) et ledit au moins un magasin de tampon (3) une aiguille de triage (5) destinée à orienter les brosses (2) et/ou à répartir les brosses (2) chaque fois dans un magasin de tampon (3).

20. Tampon selon la revendication 19, **caractérisé en ce que** l'aiguille de triage (5) présente au moins un tube de reprise (28) monté de façon rotative pour chaque fois une brosse (2) qui peut être positionné entre une position d'alimentation disposée dans le prolongement du canal de transport (25) du dispositif de séparation (4) et une position d'évacuation basculée par rapport à celui-là et tournée vers un canal d'alimentation (34) d'un magasin de tampon (3).

21. Tampon selon la revendication 19 ou 20, **caractérisé en ce qu'**il est prévu deux tubes de reprise (28) disposés avec un décalage de 90° l'un par rapport à l'autre dans la direction de basculement, qui sont disposés l'un derrière l'autre transversalement au plan de basculement, et **en ce qu'**il est prévu un coulisseau (31) pour le positionnement du canal de transport (25) du dispositif de séparation (4) au tube de reprise respectif (28) tourné vers celui-là dans son prolongement.

22. Tampon selon la revendication 19 ou 20, **caractérisé en ce qu'**il est prévu deux tubes de reprise (28) qui se coupent, disposés avec un décalage de 90° l'un par rapport à l'autre dans la direction de basculement.

23. Tampon selon l'une quelconque des revendications 19 à 22, **caractérisé en ce qu'**il est prévu un coulisseau (35) pour le positionnement à chaque fois d'un canal d'alimentation (34) d'un magasin de tampon (3) chaque fois à une extrémité de décharge d'un tube de reprise (28).

24. Tampon selon l'une quelconque des revendications 19 à 23, **caractérisé en ce qu'**il est prévu un détecteur (32) pour la détection de l'orientation et/ou de la nature de la brosse (2) disposée dans un tube de reprise (28).

25. Tampon selon l'une quelconque des revendications 1 à 24, **caractérisé en ce que** ledit au moins un canal d'évacuation (41), le canal d'alimentation (34) et/ou les canaux de transport (47) et les canaux d'évacuation (46) sont des tuyaux flexibles.
